# EUROPÄISCHE PATENTANMELDUNG

(11) **EP 4 495 154 A1**
(43) Veröffentlichungstag der Anmeldung: **22.01.2025**
(21) Anmeldenummer: 24185889.3
(22) Anmeldetag: 02.07.2024
(51) Int. Cl.: C08G 18/08, C08J 11/04, C08L 27/06, C08L 75/04, C08K 3/16

(54) **PARTIKEL AUS METALLION-POLYMER KOMPLEXEN ALS FÜLLSTOFF FÜR KUNSTSTOFFFOLIEN**

(30) Priorität: 20.07.2023 DE 102023206911
(71) Anmelder: Benecke-Kaliko AG, 30419 Hannover (DE)
(72) Erfinder: Neumann, Thorsten, 30419 Hannover (DE); Behrndt, Jan-Philipp, 30419 Hannover (DE); Holler, Nils, 30419 Hannover (DE); Neumann, Surekha, 30419 Hannover (DE)
(74) Vertreter: Continental Corporation

(57) **Zusammenfassung**

Die vorliegende Erfindung betrifft wasserunlösliche Partikel, die einen Komplex aus einem wasserdispergierbaren Polymer mit anionischen funktionellen Gruppen und mehrwertigen Metallkationen umfassen oder aus solchen Komplexen gebildet sind. Solche Partikel können in einfacher Weise durch Zugabe von Salzen mit mehrwertigen Kationen zu Dispersionsresten wässriger Basis, wie Acrylat- oder Polyurethandispersionen hergestellt werden, die anderweitig teuer entsorgt werden müssten. Die die Partikel gut als Füllstoffe für Polymerfilme verwendet werden können, wird zudem eine vorteilhafte Recyclingmöglichkeit für die Dispersionsreste bereitgestellt. Die vorliegende Erfindung betrifft weiterhin Verfahren zur Herstellung solcher wasserunlöslicher Partikel, Polymer-Partikel Komposite, die solche wasserunlöslichen Partikel umfassen, und die Verwendung solcher wasserunlöslicher Partikel zur Verbesserung der Abriebfähigkeit oder der Flammschutzeigenschaften von Polymeren durch Bildung eines Polymer/Partikel-Komposits mit den wasserunlöslichen Partikeln.

## Beschreibung

Die vorliegende Erfindung betrifft wasserunlösliche Partikel, die einen Komplex aus einem wasserdispergierbaren Polymer mit anionischen funktionellen Gruppen und mehrwertigen Metallkationen umfassen oder aus solchen Komplexen gebildet sind. Die vorliegende Erfindung betrifft weiterhin Verfahren zur Herstellung solcher wasserunlöslicher Partikel, Polymer/Partikel-Komposite, die solche wasserunlöslichen Partikel umfassen, und die Verwendung solcher wasserunlöslicher Partikel zur Verbesserung der Abriebfähigkeit oder der Flammschutzeigenschaften von Polymeren durch Bildung eines Polymer/Partikel-Komposits mit den wasserunlöslichen Partikeln.

### Stand der Technik

Die Verwendung von Beschichtungszusammensetzung auf wässriger Basis, die Polyurethane oder Polyacrylate enthalten, hat in der Industrie eine hervorgehobene Bedeutung, weil durch solche Zusammensetzungen Lösungsmittel, und damit bei der Verarbeitung der Zusammensetzung einhergehende Emissionen vermieden werden.

Technisch relevante Wässrige Dispersionen sind in einem hohen Prozentsatz kleine Polymer-Latizes, die in einem wässrigen Medium durch eine geladene äußere Oberfläche vor Koagulation bzw. Separation stabilisiert sind. Diese Ladungen sind zu einem hohen Prozentsatz auf anionischer Basis, z.B. in Form von Sulfaten oder Carboxylaten. Ein geringerer Anteil der Dispersionen ist neutral bzw. ungeladen. Die wässrigen Dispersionen können auf Polyurethanen, Polyestern, Acrylaten, Polyolefinen, PVC, Silikonen und Siloxanen, Polyvinylidenfluorid (PVDF) sowie Copolymeren, Blends oder Mischungen vorliegen.

Bei der Verarbeitung solcher wässriger Dispersionen, beispielsweise in Form von Lacken, fallen allerdings in der Regel auch Abfälle an, beispielsweise Lacken, die mit Vernetzern versetzt wurden. Solche Dispersionsreste werden heutzutage zu einem hohen Prozentsatz durch Verbrennen entsorgt, obwohl die Polymere in diesen Systemen noch gut verwertbar sein können. Eine solche Entsorgung ist mit nicht unerheblichen Entsorgungskosten verbunden, da das in den Dispersionen enthaltene Wasser selbst nicht als Brennstoff wirkt und zudem für dessen Verdampfung verhältnismäßig viel Energie aufgewendet werden muss. Zudem hat eine Entsorgung durch Verbrennen den Nachteil, dass wertvolle Rohstoffe entsorgt und vernichtet werden, was in Anbetracht der insbesondere in den letzten Jahren stark gestiegenen Rohstoffkosten mehr und mehr als problematisch und unerwünscht angesehen wird.

Vor diesem Hintergrund besteht ein Bedarf für kostengünstige Aufbereitungs- und Verwendungsmöglichkeiten für solche Dispersionsreste. Hierbei sollte einerseits das in den Dispersionen enthaltene Wasser mit relativ wenig Aufwand abgetrennt werden können, d.h. möglichst mit Hilfe eines Verfahrens, bei dem das Wasser nicht verdampft werden muss, und andererseits sollten die in den Dispersionen enthaltenen organischen Komponenten in einen Wertstoff umgewandelt werden, der, möglichst direkt, in andere Prozessen verwertet werden kann.

Die vorliegende Erfindung befasst sich mit diesem Bedarf.

### Beschreibung der Erfindung

In den dieser Erfindung zu Grunde liegenden Untersuchungen wurde überraschend gefunden, dass die organischen Komponenten der Dispersionen durch die Zugabe von mehrwertigen Kationen aus der Dispersionen gefällt werden können, wobei sich aus den in den dispergierten Polymeren enthaltenen anionische Gruppen und den zugegebenen mehrwertigen Kationen Komplexe bilden. Diese Komplexe sind in dem wässrigen Lösungsmittel dann nicht mehr löslich und fallen aus, so dass das Wasser von der entstehenden Mischung durch einfaches Filtrieren oder Zentrifugieren abgetrennt werden kann. Die so ausgefällten Komplexe bilden Partikel, die ihrerseits als Füllstoffe in Beschichtungszusammensetzungen eingesetzt werden können, wobei durch die weitgehend organische Basis der Partikel eine gute Kompatibilität mit Polymeren in der Beschichtungszusammensetzung gewährleitet ist. Durch eine solche Weiterverarbeitung entsprechend behandelter Dispersionsreste können Entsorgungskosten weitgehend minimiert und die in den Resten enthaltenen organischen Komponenten einer weiteren sinnvollen Nutzung zugeführt werden.

Demzufolge betrifft die vorliegende Erfindung gemäß einem ersten Aspekt wasserunlösliche Partikel, die aus einem Komplex aus einem wasserdispergierbaren Polymer mit anionischen funktionellen Gruppen und mehrwertigen Metallkationen gebildet sind.

Die Partikel sind entsprechend einerseits aus mehrwertigen Kationen, die beim Verbrennen der Partikel als Oxide zurückbleiben, und andererseits aus dem organischen Polymer gebildet, das die Polymerbasis der wässrigen Dispersionen, die mit einer die mehrwertigen Kationen enthaltenden Lösung behandelt wird, bildet. Durch die Bildung der Komplexe mit dem organischen Polymer liegen die Kationen in den Partikeln homogen verteilt vor.

Es ist auch denkbar, dass die Partikel zusätzlich Komplexe von mehrwertig geladenen Tensiden und/oder Dendrimeren enthalten, die verwendet werden können um Polymere in wässriger Dispersion zu stabilisieren. Solche Tenside oder Dendrimere können zusätzlich zu den Polymeren mit anionischen funktionellen Gruppen verwendet werden, oder aber mit Polymeren verwendet werden, die selbst keine anionischen funktionellen Gruppen enthalten, so dass für die Dispergierung der Polymere entsprechende Tenside oder Dendrimere zugegeben werden müssen. Grundsätzlich erfolgt die Destabilisierung und "Ausfällung" der Polymere aus der Dispersion auch in diesem Fall aber auf ähnliche Weise, indem die dispersionstabilisierende Funktion der Tenside oder Dendrimere durch die Zugabe der mehrwertigen Kationen gestört wird. Da in diesem Fall auch aus den Tensiden oder Dendrimeren ein Komplex mit einer deutlich herabgesetzten Hydrophilie gebildet wird, bilden sich auch in diesem Fall Partikel, die das Polymer und die Komplexe aus Tensiden und/oder Dendrimeren enthalten. Die Angabe "wasserdispergierbar" ist im Kontext der Erfindung damit so zu verstehen, dass die Polymere entweder von sich aus wasserdispergierbar sind (bei einem pH-Wert, bei dem funktionelle Gruppen im Polymer in anionischer Form vorliegen) oder durch die Zugabe von mehrwertig geladenen Tensiden oder Dendrimeren in Wasser dispergiert vorliegen. In einer bevorzugten Ausführungsform enthalten die wasserunlöslichen Partikel Polymere, die selbst funktionelle anionische Gruppen enthalten, und die in den Partikeln in Form von Komplexen mit den mehrwertigen Kationen gebunden sind.

Der Anteil der mehrwertigen Kationen in den Partikeln unterliegt keine relevanten Beschränkungen, wobei dieser aber in der Regel von der Menge der in dem Polymer enthaltenen funktionellen Gruppen, die mit den mehrwertigen Kationen Komplexe bilden, abhängt. Als geeigneter Gehaltsbereich kann für die erfindungsgemäßen Partikel ein Gehalt von 0,001 bis 50 Gew.-%, bevorzugt von 0,01 bis 20 Gew.-% und weiter bevorzugt 0,01 bis 5 Gew.-% angegeben werden. Der Gehalt der Kationen kann dabei z.B. mittelbar über den Aschegehalt aus der Verbrennung der Partikeln bestimmt werden, wobei angenommen werden kann, dass die Asche die mehrwertigen Kationen in Form der entsprechenden Oxide enthält (für die Berechnung des Kationengehalts wird vom Aschegehalt der auf Sauerstoff in Oxiden entfallende Gewichtsanteil abgezogen). Die Art der mehrwertigen Kationen kann über eine Elementaranalyse bestimmt werden. Hinsichtlich der vorstehend genannten Obergrenzen ist weiterhin darauf hinzuweisen, dass sich höhere Kationengehalte insbesondere dann ergeben, wenn die Partikel neben in Komplexen gebundenen mehrwertigen Kationen zusätzliches Salz von mehrwertigen Kationen enthalten. Dies kann sich, wie des im Nachfolgenden noch beschrieben wird, insbesondere dann ergeben, wenn die Partikel nicht durch filtrieren von der flüssigen Reaktionsmischung abgetrennt werden, sondern Wasser und gegebenenfalls vorhandene weitere Lösungsmittel aus der Reaktionsmischung verdampft werden.

Bevorzugte mehrwertige Kationen, die in den erfindungsgemäßen Partikeln verwendet werden können, sind in der Regel mehrwertige Kationen, die biologisch unbedenklich und einfach verfügbar sind, wie beispielsweise Calcium, Magnesium, Zink, Zinn, Eisen, Aluminium, Kupfer oder Barium. In einer besonders bevorzugten Ausführungsform handelt es sich bei den mehrwertigen Kationen um Calciumionen. In einer anderen bevorzugten Ausführungsform handelt es sich bei den mehrwertigen Kationen um Zinkionen.

Das Polymer, dass in den erfindungsgemäßen Partikeln enthalten ist, unterliegt ebenfalls keinen relevanten Beschränkungen, d.h. bei dem Polymer kann es sich um jedes Polymer handeln, das als stabile wässrige Dispersion bereitgestellt werden kann. Bei dem Polymer kann es sich insbesondere handeln um Polyurethane, Polyurethan-Polyharnstoffe, Polyester, Polyacrylate, Polyolefine, Polyvinylchlorid, Silikone, Siloxane, Polyvinylidenfluorid, sowie Copolymere, Blends oder Mischungen davon. Bevorzugt ist es aber, wenn das Polymer sortenrein, d.h. nur aus einem der vorgenannten Polymertypen bestehend, ist.

Polyurethan-Polyharnstoffe sind im Kontext der hier beschriebenen Erfindung Polymere, in denen die Wiederholungseinheiten sowohl durch Urethan (-NH-CO-O-), als auch durch Harnstoffgruppen getrennt sind. Solche Polyurethan-Polyharnstoffe können hergestellt werden durch Umsetzung von Polyisocyanten mit Polyolen, Polyaminen und Verbindungen mit NH und OH Gruppen, oder durch die Zugabe von Wasser zu Polyisocyanatpräpolymeren, bei denen ein Teil der Isocyanatgruppen zu NH₂ abgebaut wird, das anschließend mit noch vorhandenem Isocyanat zu Harnstoffgruppen reagiert.

Die Polymere sind in einer bevorzugten Ausführungsform zur Bildung einer Dispersion in Wasser mit anionischen Gruppen funktionalisiert, d.h. solche Gruppen sind kovalent an das Polymer angebunden. Die Art des Polymers in den Partikeln lässt sich dabei durch übliche Analyseverfahren, wie beispielsweise IR-Spektroskopie oder Festkörper-NMR-Messungen bestimmen.

Die in das Polymer eingebundenen anionischen Gruppen sind bevorzugt ausgewählt aus Carboxylatgruppen (-CO₂⁻), Phosphatgruppen, Phosphonatgruppen, Sulfatgruppen, oder Sulfonatgruppen oder mehreren dieser Gruppen. Aufgrund der Verfügbarkeit als Monomere sind Carboxylatgruppen und Sulfatgruppen bevorzugt. In den Polymerdispersionen, die zur Herstellung der erfindungsgemäßen Partikel verwendet werden, liegen diese meist als Salze mit einwertigen Kationen, z.B. in Form von Ammoniumionen, Natrium-, Kalium- oder Lithiumionen vor, die durch Zugabe der mehrwertigen Kationen (aufgrund des Chelat-Effekts) verdrängt werden, so dass die einwertigen Kationen in den erhaltenen Partikeln in der Regel nur noch in Spuren enthalten sind.

In einer bevorzugten Ausführungsform handelt es sich bei den Polymer, aus dem die erfindungsgemäßen Partikel gebildet sind, um ein Polyurethan, das Einheiten von Diaminoverbindungen bzw. Dihydroxyverbindungen enthält, die zusätzlich Sulfonat- und/oder Carboxylatgruppen tragen, wie beispielsweise die Natrium-, Lithium-, Kalium-, oder tert-Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 Mol Diamin wie z.B. 1 ,2-Ethandiamin oder Isophorondiamin mit 2 mol Acrylsäure oder Maleinsäure.

In einer anderen bevorzugten Ausführungsform handelt es sich bei den Polymer um ein Acrylatpolymer. Die Bezeichnung "Acrylatpolymer" bezeichnet im Kontext der hier angegebenen Erfindung Polymere der Acrylsäure und Methacyrlsäure und Estern dieser Säuren, sowie gemischte Polymere mit Acrylsäure und Methacyrlsäure, sowie Estern dieser Säuren. Anionische Gruppen in solchen Acrylatpolymeren sind bevorzugt Carboxylatgruppen, die auf Acrylsäure, Methacrylsäure, Malein- oder Fumarsäure, Itakonsäure, 3-Butensäure oder andere Monomere zurückgehen, die Copolymere mit (Meth)Acylaten bilden. Eine weitere Klasse von bevorzugt in Acrylatpolymeren verwendeten funktionellen Gruppen zur Vermittlung von Dispersionsfähigkeit für die Polymere sind Sulfat- und Sulfonatgruppen, die z.B. über Vinylsulfonsäure als Monomer in ein Acrylatpolymer einbezogen werden können.

Die Größe der hergestellten Partikel kann im Hinblick auf den Zweck der späteren Verwendung der Partikel vorteilhaft eingestellt werden, wobei sich die Partikelgröße in den meisten Fällen im Bereich von 1 bis 500 µm und bevorzugt im Bereich von 5 bis 100 µm bewegt. Diese Partikelgröße bezeichnet im Kontext der hier angegebenen Erfindung die mittlere Partikelgröße (D50), die mit einem für deren Bestimmung geeigneten Verfahren (wie Laserbeugung, beispielsweise unter Verwendung eines Partikelgrößen Analysators der Firma Anton Paar) bestimmt wird. Für eine Verarbeitung zu Folien, die beispielsweise mit Hilfe eines Extruders oder Kalander hergestellt werden, ist eine Partikelgröße von < 500µm geeignet, während bei Beschichtungen, beispielsweise in Mehrschichtverbundsystemen, und Partikelgröße von < 100 µm anzustreben ist.

In einer bevorzugten Ausführungsform sind die erfindungsgemäßen Partikel eingefärbt, bzw. enthalten einen Farbstoff.

Die erfindungsgemäßen wasserunlöslichen Partikel können relativ leicht und kostengünstig erzeugt werden, indem eine wässrige Dispersion, die die polymeren Vorläufer der späteren Partikel enthält, mit einer Lösung der mehrwertigen Kationen in Verbindung gebracht wird. Ein weiterer Aspekt der vorliegenden Erfindung betrifft demzufolge ein Verfahren zur Herstellung von wasserunlöslichen Partikeln wie sie im vorstehenden beschrieben wurden, wobei das Verfahren die folgenden Schritte umfasst:
i) Bereitstellen einer wässrigen Dispersion des Polymers;
ii) Zugabe eines Salzes oder einer Lösung eines Salzes, das mehrwertige Kationen enthält, unter Bildung von wasserunlöslichen Partikeln,
iii) Abtrennen der gebildeten wasserunlöslichen Partikel von Restwasser, und gegebenenfalls
iv) Trocknen der erhaltenen wasserunlöslichen Partikel.

Für die Herstellung der Partikel muss das mehrwertige Kation zumindest übergangsweise gelöst sein, wobei aber das Wasser der Dispersion als Lösungsmittel verwendet werden kann. Entsprechend macht es keinen relevanten Unterschied, ob das Salz zunächst gelöst und dann zur wässrigen Polymerdispersion zugegeben wird, oder ob das Salz direkt zu der wässrigen Polymerdispersion zugegeben wird, in der es sich in der Folge löst und mit dem Polymer wasserunlösliche Partikel bildet.

Nach der Zugabe des mehrwertigen Salzes in ii) kann es einige Zeit dauern, bis die Bildung von wasserunlöslichen Partikel abgeschlossen ist. Nach dieser Zugabe kann es daher sinnvoll sein, für einige Zeit zu warten, bis der Prozess der Bildung der Partikel abgeschlossen ist. Zweckmäßig ist hier eine Wartezeit von 10 Min bis 2h und bevorzugt 20 Min bis 1h.

Das Abtrennen der gebildeten wasserunlöslichen Partikel in Schritt iii) kann durch jede dem Fachmann für die Trennung von festen und flüssigen Bestandteilen bekannte Vorgehensweise erfolgen. Als besonders geeignet sind dafür eine Abtrennung durch Sieben, Filtrieren, Zentrifugieren oder Sedimentieren (und Abdekantieren des Wassers) zu nennen. Beispielsweise kann für das Abtrennen ein Sieb mit einer Maschenweite im Bereich von 50 bis 500 µm und bevorzugt 200 bis 400 µm verwendet werden. Wenn das Abtrennen der Partikel über ein Sieb oder filtrieren erfolgt, kann dies auch durch Anlegen eines Unterdrucks auf der Seite des "Filtrats" unterstützt werden.

Das Trocknen ist im Rahmen des hier angegebenen Verfahrens optional, d.h. in Einzelfällen können die über das angegebene Verfahren hergestellten Partikel auch ohne Trocknen weiterverwendet werden, beispielsweise, wenn diese in eine wässrige Polymerdispersion einbezogen werde. Wenn die erhaltenen wasserunlöslichen Partikel getrocknet werden, kann dies bei erhöhter Temperatur erfolgen, beispielsweise bei einer Temperatur von mindestens 50°C, bevorzugt mindestens 60°C und weiter bevorzugt mindestens 70°C. Auf der anderen Seite sollte die Trocknungstemperatur so gewählt sein, dass eine Zersetzung der Polymere in den wasserunlöslichen Partikeln vermieden wird. In einer Ausführungsform wird das Trocknen bei einer Temperatur von 150°C oder weniger durchgeführt. Alternativ, oder zusätzlich dazu kann das Trocknen durch Anlegen eines Unterdrucks, beispielsweise von weniger als 900 mbar oder im Bereich von 10 bis 800 mbar erfolgen, oder durch einen solchen Unterdruck unterstützt werden. Eine Vorrichtung, die zum Trocknen der Partikel verwendet werden kann, ist beispielsweise ein Mischtrockner.

Unter dem Gesichtspunkt der Löslichkeit sind Salze, die in Schritt ii) des angegebenen Verfahrens eingesetzt werden, Salze mit einer guten Löslichkeit in Wasser, wobei Salze mit einwertigen Anionen unter dem Aspekt der Ausnutzung des Chelat-Effekts für die Bildung der wasserunlöslichen Partikel besonders bevorzugt sind. Mit besonderem Vorteil verwendbare einwertige Anionen sind zum einen Halogenide, insbesondere in Form von Chlorid, Bromid oder lodid, von den Chlorid am meisten bevorzugt ist. Aus Chloriden werden in Kombination mit für die Dispergierung der Polymere verwendeten einwertigen Kationen wie Natrium oder Kalium gut in Wasser lösliche Salze gebildet, die auch aus Umweltgesichtspunkten unbedenklich sind. Ein anderes einwertiges Anion, das in Kombination mit den mehrwertigen Kationen verwendet werden kann und mit diesen in der Regel gut in Wasser lösliche Salze bildet, ist das Nitratanion.

Die Partikelgröße der wasserunlöslichen Partikel, die über das angegebene Verfahren gebildet werden, lässt sich über geeignete Verfahrensbedingungen in gewissen Grenzen steuern, beispielsweise, in dem das Salz zu einer Polymerdispersion zugegeben wird, die Scherbedingungen ausgesetzt wird. Diese Bedingungen können beispielsweise durch schnelles Rühren der Dispersion mit einem geeigneten Rührer oder einer Dispergierscheibe erzeugt werden. Die Scherbedingungen können dabei vorteilhafterweise so eingestellt werden, dass Partikel mit einer Partikelgröße von < 500 µm und weiter bevorzugt < 100 µm erhalten werden. Diese Einstellung kann der Fachmann abhängig von den für die Herstellung der Partikel verwendeten Apparaturen und Rahmenbedingungen durch einfache Testreihen leicht bestimmen.

Alternativ kann im Rahmen des angegebenen Verfahrens die Zugabe der Lösung des Salzes aus mehrwertigen Kationen während des Rührens mit einer Dispergierscheibe mit einer Umfangsgeschwindigkeit von mindestens 5 m/s und bevorzugt 8 bis 20 m/s eingestellt werden.

Um überschüssige mehrwertige Kationen aus den ausgefällten Partikeln abtrennen, die bei einer späteren Formulierung der Partikel in anderen Polymerdispersionen stören könnten, kann es zweckmäßig sein, die ausgefällten Partikel nach dem Abtrennen des Wassers zu waschen, wobei zweckmäßig als Waschlösungsmittel Wasser verwendet wird.

In den der hier geschilderten Erfindung zu Grunde liegenden Untersuchungen wurde überraschend auch gefunden, dass Partikel aus einer wässrigen Polymerdispersion auch durch die Einleitung von CO₂ in die Dispersion erzeugt werden können. Bei der Zugabe von CO₂ beruht die Destabilisierung der Dispersionen und die Bildung von Polymerpartikel darauf, dass der pH-Wert graduell in den sauren Bereich verschoben wird, wodurch ebenfalls die stabilisierende Funktion der anionischen Gruppen neutralisiert wird; dies führt zu einer Ausfällung der Polymere aus der Dispersion.

In einem weiteren Aspekt betrifft die vorliegende Erfindung demzufolge ein Verfahren zur Herstellung wasserunlöslichen Partikeln aus einer wässrigen Polymerdispersion durch Zugabe von CO₂, wobei das Verfahren die folgenden Schritte umfasst:
i) Bereitstellen einer wässrigen Dispersion des Polymers;
ii) Zugabe von CO₂ in die Dispersionsmischung in einem Umfang, dass sich aus dem dispergierten Polymer wasserunlösliche Partikel bilden, wobei bevorzugt so lange CO₂ zugegeben wird, bis die Bildung der Partikel abgeschlossen ist (ersichtlich dadurch, dass bei weiterer Einleitung von CO₂ keine weiteren Partikel mehr gebildet werden),
iii) Abtrennen der gebildeten wasserunlöslichen Partikel von Restwasser, und gegebenenfalls
iv) Trocknen der erhaltenen wasserunlöslichen Partikel.

Die Zugabe von CO₂ in die Dispersionsmischung erfolgt bevorzugt durch einblasen von CO₂ in die wässrige Dispersion unter Rühren. Das Abtrennen und Trockenen kann auf die gleiche Weise erfolgen, wie dies vorstehend für das Verfahren mit Zugabe eines Salzes oder einer Lösung eines Salzes, das mehrwertige Kationen enthält, angegeben wurde.

In einem noch weiteren Aspekt betrifft die vorliegende Erfindung auch Polymerpartikel, die nach einem solchen Verfahren hergestellt wurden. Solche Polymerpartikel zeichnen sich durch einen Gehalt an freien sauren funktionellen Gruppen aus, beispielsweise in Form von Carbonsäuregruppen, mit dem Polymer veresterten -OSOaH-Gruppen, Sulfonsäuregruppen, Phorphorsäure- oder Phorphonsäuregruppen aus. Solche Gruppen können beispielsweise mit Hilfe von IR- oder NMR-Spektroskopie nachgewiesen werden.

Für diese alternativen Partikel und das Verfahren zu ihrer Herstellung gelten Ausführungsformen, die vorstehend für die wasserunlöslichen Partikel in Form von Komplexen der Polymere mit mehrwertigen Kationen und das Verfahren zur Herstellung solcher Partikel als bevorzugt angegeben wurden, ebenfalls als bevorzugt, soweit diese nicht im Widerspruch zu der alternativen Verwendung von CO₂ anstelle von mehrwertigen Kationen zur Bildung der Partikel stehen.

Wenn die durch das Verfahren erhaltenen Partikel die für eine spätere Verwendung gewünschte Partikelgröße nicht oder nicht in wünschenswertem Umfang aufweisen sollte, kann diese auch durch einen der Trocknung nachgeschalteten Bearbeitungsschritt eingestellt werden. Ein geeigneter Verfahrensschritt, um den das angegebene Verfahren hierzu ergänzt werden kann, ist demzufolge ein dem Trocknen nachfolgender Schritt des Zerkleinerns das Partikel, beispielsweise durch einen Mahlprozess. Ein im Kontext des hier angegebenen Verfahrens besonders geeigneter und schonender Mahlprozess, bei dem ein unerwünschter Abbau der Polymere in den Partikeln weitgehend vermieden wird, ist eine Turbo-Mahlung, bei der die Partikel mit einem Turborotor in einer Gasatmosphäre wie Luft behandelt werden; dabei werden die Partikel durch gegenseitiges Stoßen aneinander zerkleinert. Vorrichtungen für eine Turbo-Mahlung, die für eine entsprechende Behandlung der Partikel verwendet werden können, sind beispielsweise die von der Firma Mahltechnik Görgens GmbH hergestellten Turbomahlvorrichtungen.

Das Trocknen kann im erfindungsgemäßen Verfahren durch Erwärmen des Produkts oder Behandeln des Produkts mit warmer Luft erfolgen und/oder durch Behandlung im Unterdruck/Vakuum erfolgen oder unterstützt werden.

Im Rahmen des angegebenen Verfahrens ist es ebenfalls denkbar, dass die in das Verfahren einbezogene wässrige Dispersion zusätzlich ein organisches Lösungsmittel enthält, und wobei das Lösungsmittel im Rahmen des Verfahrens aus der Dispersion zurückgewonnen wird. Dies kann z.B. dadurch erfolgen, dass in einem ersten Schritt die ausgefällten Partikel von dem Wasser und Lösungsmittel abgetrennt werden und in einem zweiten Schritt Wasser und Lösungsmittel voneinander getrennt werden. Ein mögliches Trennverfahren zur Separierung von Wasser und einem solchen Lösungsmittel ist beispielsweise eine Vakuumdestillation. Eingesetzte wässrige Dispersionen können 1 bis 50 Gew.-% Lösungsmittel (bezogen auf die Gesamtmenge an Wasser und Lösungsmittel in der Dispersion) enthalten, z.B. in Form von Aceton, Ethanol, Isopropanol, Butandiol, etc..

Wenn die im Verfahren verwendete wässrige Dispersion ein organisches Lösungsmittel enthält, können auch die Schritte des Abtrennens und des Trocknen in einer Stufe zusammengefasst werden, wobei dann Wasser und gegebenenfalls vorhandene Lösungsmittel mittels Vakuumdestillation von den Polymerpartikeln abgetrennt, und die erhaltenen Partikel gleichzeitig getrocknet werden. In einer solchen Behandlung kann mit nur einer Apparatur, z.B. in Form eines Vakuum-Trocknungsgeräts z.B. der Firma Amixon, das organische Lösungsmittel zurückgewonnen und das hergestellte Pulver getrocknet werden.

Wie vorstehend bereits erwähnt können die erfindungsgemäßen Partikel vorteilhaft als feste Füllstoffe zur Verfestigung von Polymerprodukten verwendet werden, in denen die Partikel in eine feste Matrix eines anderen Polymers eingebettet werden. Gegenüber konventionellen anderen Füllstoffen besteht bei den erfindungsgemäßen Partikeln der Vorteil, dass eine Anbindung an die anderen Polymere auf Grund des hohen Anteils an organischen Komponenten in den Partikeln erleichtert ist (im Vergleich zu anorganischen Füllstoffen), so dass Partikeloberflächen mit Oberflächeneigenschaften bereitgestellt werden, die mit dem Matrixpolymer vergleichbar sind. Dies gilt insbesondere in Fällen, in denen das in den Partikeln enthaltene Polymer auf demselben Polymertyp beruht, wie das Matrixpolymer (wie z.B. bei einer Kombination von Polyurethan als Matrixpolymer mit Partikeln, die Polyurethan als Polymerkomponente enthalten).

In einem weiteren Aspekt betrifft die vorliegende Erfindung demzufolge einen Polymer/Partikel-Komposit, der ein Polymer, das als kontinuierliche Matrix ausgebildet ist, und darin dispergierte wasserunlösliche Partikel, wie sie im vorstehenden beschrieben wurden, umfasst. "Dispergiert" bezeichnet in diesem Fall den Umstand, dass die wasserunlöslichen Partikel homogen in der Polymermatrix verteilt sind, aber durch die Polymermatrix eine Entmischung von Partikel und Polymermatrix unterbunden wird.

Hinsichtlich des Polymers, dass die kontinuierliche Matrix ausbildet, unterliegt dieser Polymer/Partikel-Komposit keinen wesentlichen Beschränkungen, wobei das Polymer bei Umgebungsbedingungen (25°C) in festem Zustand vorliegen sollte. Das Polymer kann ein thermoplastisches Polymer oder ein duroplastisches Polymer sein, und es kann elastische Eigenschaften aufweisen. Bevorzugt ist das Polymer ausgewählt aus der Gruppe umfassend Polyvinylchlorid, Polyurethan, Polyolefin, Polyester, Polyamid, thermoplastisches Elastomer, Polyacrylat oder Silikon. Es ist zudem denkbar, dass das Polymer zu dem Zeitpunkt, bei dem es mit den Partikeln in Kontakt gebracht wird, als Dispersion, z.B. in Wasser, vorliegt, und sich erst beim Entfernen des in der Dispersion enthaltenen Lösungsmittel eine feste Polymermatrix bildet.

Das die Matrix ausbildende Polymer kann ein Polymer des gleichen Polymertyps sein, der in den Partikeln enthalten ist oder diese bildet, oder es kann sich um ein von diesem Polymertyp abweichendes Polymer handeln. Die Bezeichnung "Polymertyp" bezieht sich dabei auf die Verknüpfungseinheiten, d.h. z.B. Acrylate bei Acrylatpolymeren oder Vinylchlorid bei PVC; diese Bezeichnung ist nicht so zu verstehen, dass das Polymer, das die Partikel bildet, mit dem Polymer, das die Matrix bildet identisch sein muss (d.h. selbe Zusammensetzung und gleiches Molekulargewicht), sondern legt nur generell fest, dass die jeweiligen Polymere z.B. aus der Klasse der Acrylatpolymer ausgewählt sein sollen. Für Partikel, die nach dem vorstehend geschilderten Herstellungsverfahren durch Zugabe von CO₂ hergestellt wurden, ist es bevorzugt, wenn es sich bei dem die Matrix bildenden Polymer um ein von dem Polymer in den Partikeln verschiedenes Polymer handelt. Darüber hinaus ist es bevorzugt, wenn solche Partikel in Polymeren als Matrix und unter Formulierungsbedingungen verwendet werden, in denen sich die Partikel nicht lösen können.

In einer anderen Ausführungsform ist der Polymer/Partikel-Komposit als flächenförmiges Gebilde, z.B. als Film, ausgebildet. Solche Filme können in jeder geeigneten oder gewünschten Schickdicke erzeugt werden, wobei es bevorzugt ist, wenn der Film eine Schichtdicke im Bereich von 1 bis 2000 µm und insbesondere im Bereich von 20 bis 500 µm aufweist.

Der Anteil der Partikel in dem Polymer/Partikel-Komposit ist zweckmäßig so einzustellen, dass die Menge des die Matrix bildenden Polymers eine ausreichende Verfestigung des Komposits bewirken kann. Vorzugweise liegt der Anteil der wasserunlöslichen Partikel in dem Polymer/Partikel-Komposit im Bereich von 1 bis 70 Gew.-%, weiter bevorzugt im Bereich von 3 bis 50 Gew.-% und noch weiter bevorzugt im Bereich von 5 bis 30 Gew.-%. Bei geringeren Partikelanteilen werden die Eigenschaften des Komposits im Wesentlichen von dem Matrixpolymer bestimmt, wobei diese durch die einbezogenen Partikel im wünschenswerten Umfang modifiziert und eingestellt werden können.

In einer besonders bevorzugten Ausführungsform wird als Polymer, das die Matrix in den angegebenen Polymer/Partikel Kompositen bildet, Polyvinylchlorid verwendet, dass mit wasserunlöslichen Partikeln aus Polyurethan als wasserdispergierbarem Polymer und Calcium oder Zinkionen als mehrwertigen Kationen kombiniert wird. Bevorzugt sind in dieser Ausführungsform insbesondere Zinkionen. Zinkionen haben den Vorteil einer potentiellen Freisetzung aus dem Komplex über die Zeit, wodurch eine antibakterielle Wirkung vermittelt werden kann.

In dem Polymer/Partikel-Komposit können die erfindungsgemäßen Partikel alleine oder in Kombination mit weiteren Additiven eingesetzt werden, wobei anorganische Additive, die in dem Polymer oder einer Polymerdispersion schlechtlöslich sind, verwendet werden können um ein Anhaften der erfindungsmäßen Partikel aneinander zu unterdrücken. Als zu diesem Zweck verwendbare Additive sind Salze wie Calciumcarbonat (insbesondere in fein gemahlener Form), Calciumhydroxid, Natriumhydrogencarbonat oder organische Substanzen wie Glykole zu nennen.

Wenn die erfindungsgemäßen Partikel einen Farbstoff enthalten kann bei Verwendung eines Polymers, das keinen oder einen anderen Farbstoff enthält, ein Polymer/Partikel-Komposit mit eine "gesprenkelten" Aussehen erzeugt werden, weil der Farbstoff in den Partikeln nur eine geringe Tendenz zur Migration aufweist. In einer Ausführungsform des hier angegebenen Polymer/Partikel-Komposits ist es entsprechend bevorzugt, wenn dieser in den Partikeln einen Farbstoff enthält, und das Polymer, das die Matrix in dem Komposit bildet, keinen oder einen anderen Farbstoff enthält. Die farbigen Partikel eines solchen Komplex-Füllstoffs kann auf diese Weise in Design-Aspektmustern in Folien und Kunstledern gezielt eingesetzt werden. Der Vorteil liegt in diesem Fall darin, dass in solchen Filmen und Kunstledern das gesprenkelte Aussehen nicht durch Aufdrucken auf die Oberfläche erzeugt wird, sondern im Film eingebaut wird, was zur Folge hat, dass ein Abreiben des Lackmusters nicht zu einer Veränderung der Designoberfläche führt.

In einer bevorzugten Ausführungsform betrifft die vorliegende Erfindung demzufolge ein Kunstleder, dass eine obere Schicht, die aus dem vorstehend angegebenen Polymer/Partikel-Komposit gebildet ist aufweist, wobei gegebenenfalls auf dieser Schicht noch ein oder mehrere weitere Lackschichten, bevorzugt als transparente Schichten, angeordnet sein können. Ein "Kunstleder bezeichnet in diesem Fall ein Verbundgebilde, das neben der Schicht aus dem Polymer/Partikel-Komposit eine textile Trägerschicht und/oder einer Träger- oder Zwischenschicht aus PVC, Polyolefin oder einem Polyurethanschaum, sowie gegebenenfalls zwischen den einzelnen Schichten angeordnete Klebstoffschichten aufweist.

Als Farbstoff können auch Fluoreszenz und/oder Phosphoreszenzfarbstoffe oder -Pigmente in die Partikel einbezogen werde, was insbesondere bei Phosphoreszenzfarbstoffen und Pigmenten, welche durch hohe Mohs-Härten bekannt sind, die technische Umsetzbarkeit verbessern kann.

Bei einer Herstellung der erfindungsgemäßen Partikel aus Lackabfalldispersionen, zeichnen sich die resultierenden Komplexfüllstoffe meist durch eine hohe Härte im Vergleich zu anderen vergleichbaren Polymeren aus. Solche Partikel können in entsprechenden Polymer/Partikel-Kompositen daher eine verbesserte Abriebresistenz der generierten Schichten vermitteln. Geeignete Lackabfalldispersionen können beispielsweise auf Polyurethanen, Silikonen, Acrylaten, PVC-Copoylmeren, PVDF, Polyestern, oder Polyamiden beruhen, die durch Umsetzung mit Vernetzen, insbesondere auf Basis von Isocyanaten, Epoxiden, Carbodiimden vernetzt sein können. Die Lackabfalldispersionen können darüber hinaus Partikel auf der Basis von Schichtsilikaten (z.B. Acematt TS 100) oder Aluminiumhydroxid enthalten, die die Fällung der Polymere begünstigen können, und dabei in die erfindungsgemäßen Partikel eingeschlossen werden, und die bevorzugt eine Partikelgröße im Bereich von 10 bis 50 nm aufweisen (bestimmt mittel Laserbeugung). Darüber hinaus können in den Lackabfalldispersionen inaktive Füllstoffe wie Calciumcarbonat, Diatomeenerde, Glimmer, Kaolin, Kreide, Quarz und Talkum enthalten sein.

In einer bevorzugten Ausführungsform ist der Polymer/Partikel-Komposit aus einer Kombination von auf Polyurethan als Polymerkomponente basierenden Partikeln und einer Polyurethandispersion gebildet. Auf diese Weise kann ein Monomaterial (nur auf Polyurethan beruhend) mit bestimmten Eigenschaften erzeugt und generiert werden. Dabei sind die Partikel auf Polyurethanbasis auch nicht mehr in Lösungsmitteln löslich, wenn diese mehrwertige Kationen enthalten.

In einer weiteren bevorzugten Ausführungsform beruhen die Partikel des Polymer/Partikel-Komposit auf Polyurethan mit einem höheren Anteil an Polyurethangruppen (d.h. mindestens 1 bis 30 Gew.-%, und bevorzugt 3 bis 20 Gew.-%, bezogen auf das Gesamtgewischt des Polyurethans) und das Polymer, das die Matrix des Komposits bildet, besteht auf PVC, wobei die Partikel zur Verbesserung der Flammschutzeigenschaften in das PVC einbezogen werden. Auf diese Weise können auch größere Anteile des Komplex-Füllstoffs in Partikelform eingesetzt werden, was eine preiswerte Möglichkeit zur Verbesserung der Flammschutzeigenschaften dieses Materials darstellt. Dies gilt insbesondere, wenn die mehrwertigen Kationen in den Partikeln durch Calciumionen bereitgestellt werden, was demzufolge für diese Ausführungsform und Anwendung bevorzugt ist.

Die angegeben Polymer/Partikel-Komposite können mittels üblicher Fertigungstechniken verarbeitet werden, wie sie für die eingesetzten Matrixpolymere bekannt sind, wobei für die Herstellung von Filmen oder Folien beispielsweise ein Verarbeiten durch Extrudieren oder Kalandrieren angegeben werden kann. Bei den Kalander- und Extruderapplikationen können die Partikel der Partikel der Komplex-Füllstoffe durch eine hohe Scherung zerkleinert werden.

Durch die angegebene Nutzung von Polymerdispersionsresten wird insbesondere der Vorteil einer verbesserten CO₂-Bilanz und eines verbesserten GWP (= Global Warming Potential)-Werts realisiert.

Im Folgenden soll die vorliegende Erfindung anhand von einigen Ausführungsbeispielen weiter illustriert werden, die nicht in irgendeiner Weise als beschränkend für den Schutzumfang der Anmeldung aufgefasst werden sollten.

### Beispiele:

### Beispiel 1: Herstellung von Komplex-Füllstoff-Partikeln

1 kg wässrige Polyurethan-Dispersion (Festanteil 60 Gew.-%) mit 0,1 % Carboxylaten als ionischen Gruppen wurde mit 66 g Calciumchlorid, gelöst in 150 ml Wasser, unter Rühren im Dissolver und langsamer Zugabe versetzt. Die Rührbedingungen waren bei 2-3 m/s Umfangsgeschwindigkeit bei der Zugabe. Während der Zugabe erhöhte sich die Viskosität der Dispersion bis diese anfängt auszuflocken, wobei sich eine Mischung mit frischkäseähnlicher Konsistenz bildetet. Die erhaltenen Mischung wurde mit einer Dispergiergeschwindigkeit von 16-18 m/s behandelt um eine feine Partikelgröße zu erreichen und die Viskosität zu reduzieren. Die festen Bestandteile der Masse wurden über einem 300 µm Filtersieb von der flüssigen Phase getrennt. Anschließend wurde die feste Phase wird bei 80- 110°C getrocknet, wobei eine pulverige Substanz mit einer Partikelgröße von 1 - 5000µm erhalten wurde. Diese Masse wurde durch ein Trockenmahlwerk auf eine Partikelgröße von 1-60 µm reduziert, die aber grundsätzlich beliebig eingestellt werden kann.

Vergleichbar zu Polyurethandispersion können wässrige Lackzusammensetzungen mit Lösungsmittelanteil verwendet und aufgearbeitet werden. Dabei kann zusätzlich das Filtrat durch Destillation aufgearbeitet werden und somit das Lösungsmittel zurückgewonnen werden.

Als Fällungsadditive können unter anderem Benonite, Talkum, Aluminiumoxide, Aluminiumhydroxide, Tonerden, Silikate (TS 100) sowie Aktivkohle verwendet werden.

### Beispiel 2: Rezeptur eines PVC-Films mit Komplex-Füllstoff-Partikeln als Additiv

| Komponente | Mengenanteil |
|---|---|
| Emulsions-PVC | 100 |
| Phthalatweichmacher | 100 |
| Komplexfüllstoff | 30 |
| Additive/ Stabilisatoren | 5 |
| Farben/Pigmente | 10 |
| Flammschutz | 10 |

Die angegebene Rezeptur ist durch ein Prozessfenster mit Temperaturen im Bereich von 120-250°C und einer Ofenzeit von 20-300 s gekennzeichnet.

### Beispiel 3: Polyurethan-Rezeptur

| Komponente | Mengenanteil |
|---|---|
| Polyurethan High solid | 100 |
| Weichmacher | 20 |
| Vernetzer | 20 |
| Komplex-Füllstoff Partikel | 30 |
| Flammschutz | 10 |
| Pigmente/ Farben | 10 |
| Additive/ Stabilisatoren | 5 |

### Beispiel 4: Polyurethandispersion-Rezeptur

| Komponente | Mengenanteil |
|---|---|
| Pur Dispersion | 100 |
| Vernetzer | 10 |
| Komplex-Füllstoff-Partikel | 30 |
| Pigmente/ Farbstoffe | 12 |
| Additive/ Stabilisatoren | 6 |

## Patentansprüche

1. Wasserunlöslicher Partikel umfassend einen Komplex aus einem wasserdispergierbaren Polymer mit anionischen funktionellen Gruppen und mehrwertigen Metallkationen.

2. Wasserunlöslicher Partikel gemäß Anspruch 1, wobei das wasserdispergierbare Polymer auf Polyurethan, Polyester, Polyacrylat, Polyolefin, Polyvinylchlorid, Silikon, Siloxan, Polyvinylidenfluorid, Copolymeren, Blends oder Mischungen davon beruht, und bevorzugt anionische funktionelle Gruppen ausgewählt aus Carboxylatgruppen, Sulfatgruppen, Sulfonatgruppen, Phosphatgruppen oder Phosphonatgruppen aufweist.

3. Wasserunlöslicher Partikel gemäß Anspruch 1 oder 2, wobei der Partikel eine Partikelgröße im Bereich von 1 bis 500 µm und vorzugsweise im Bereich von 5 bis 100 µm aufweist.

4. Wasserunlöslicher Partikel gemäß mindestens einem der Ansprüche 1 bis 3, wobei die mehrwertigen Metallkationen ausgewählt sind aus Calcium, Magnesium, Zink, Zinn, Eisen, Aluminium oder Kupfer.

5. Verfahren zur Herstellung von wasserunlöslichen Partikeln gemäß einem der Ansprüche 1 bis 4 umfassend die Schritte:
i) Bereitstellen einer wässrigen Dispersion des Polymers,
ii) Zugabe eines Salzes oder einer Lösung eines Salzes, das mehrwertige Kationen enthält, unter Bildung von wasserunlöslichen Partikeln,
iii) Abtrennen der gebildeten wasserunlöslichen Partikel von Restwasser, und gegebenenfalls
iv) Trocknen der erhaltenen wasserunlöslichen Partikel.

6. Verfahren zur Herstellung wasserunlöslichen Partikeln aus einer wässrigen Polymerdispersion durch Zugabe von CO₂, wobei das Verfahren die folgenden Schritte umfasst:
i) Bereitstellen einer wässrigen Dispersion des Polymers;
ii) Zugabe von CO₂ in die Dispersionsmischung in einem Umfang, dass sich aus dem dispergierten Polymer wasserunlösliche Partikel bilden, wobei bevorzugt so lange CO₂ zugegeben wird, bis die Bildung der Partikel abgeschlossen ist,
iii) Abtrennen der gebildeten wasserunlöslichen Partikel von Restwasser, und gegebenenfalls
iv) Trocknen der erhaltenen wasserunlöslichen Partikel.

7. Verfahren gemäß Anspruch 5 oder 6, wobei die wasserunlöslichen Partikel in Schritt iii) mittels sieben, filtrieren, zentrifugieren oder sedimentieren von dem Restwasser abgetrennt werden, wobei vorzugsweise ein Sieb mit einer Maschenweite im Bereich von 50 bis 500 µm und bevorzugt 200 bis 400 verwendet wird.

8. Verfahren gemäß Anspruch 5 oder 6, wobei das Trocknen der abgetrennten wasserunlöslichen Partikel bei einer Temperatur von mindestens 50°C und/oder unter Unterdruck erfolgt, und/oder wobei die getrockneten Partikel einem weiteren Schritt des Zerkleinerns der Partikel, insbesondere einem Mahlprozess, bevorzugt einer Turbo-Mahlung, unterzogen werden.

9. Verfahren gemäß Anspruch 5 oder einem davon abhängigen Anspruch, wobei die in Schritt ii) zuzugebende Salzlösung ein Salz mit einwertigen Anionen, insbesondere ausgewählt aus Halogeniden, bevorzugt in Form von Chlorid, Bromid oder lodid, oder Nitrat enthält.

10. Verfahren gemäß Anspruch 5 oder einem davon abhängigen Anspruch, wobei die Feinheit der gebildeten wasserunlöslichen Partikel durch Scherbedingungen bei der Zugabe der Lösung des Salzes aus mehrwertigen Kationen eingestellt wird, bevorzugt in der Weise, dass Partikel mit einer Partikelgröße von < 500 µm und weiter bevorzugt < 100 µm erhalten werden, und/oder wobei die wässrige Dispersion des Polymers für die Zugabe der Lösung des Salzes aus mehrwertigen Kationen mit einer Dispergierscheibe mit einer Umfangsgeschwindigkeit von mindestens 5 m/s und bevorzugt 8 bis 20 m/s gerührt wird.

11. Verfahren gemäß mindestens einem der Ansprüche 5 bis 10, wobei die in das Verfahren einbezogenen Dispersion zusätzlich ein organisches Lösungsmittel enthält, und wobei das Lösungsmittel im Rahmen des Verfahrens aus der Dispersion zurückgewonnen wird, bevorzugt mittels Vakuumdestillation bei gleichzeitiger Trocknung der Partikel.

12. Wasserunlöslicher Partikel hergestellt nach einem Verfahren gemäß Anspruch 6.

13. Polymer/Partikel-Komposit umfassend ein als kontinuierliche Matrix ausgebildetes Polymer und darin dispergierte wasserunlösliche Partikel gemäß einem der Ansprüche 1 bis 4 oder 12.

14. Polymer/Partikel-Komposit gemäß Anspruch 13, wobei das als kontinuierliche Matrix ausgebildete Polymer ausgewählt ist aus der Gruppe umfassend Polyvinylchlorid, Polyurethan, Polyolefin, Polyester, Polyamid, thermoplastisches Elastomer, Polyacrylat oder Silkon, und/oder wobei der Polymer/Partikel-Komposit als Dispersion in Wasser oder als Film, bevorzugt mit einer Schichtdicke im Bereich von 8 bis 3000 µm ausgebildet ist, und/oder wobei die wasserunlöslichen Partikel einen Anteil im Bereich von 1 bis 70 Gew.-% und bevorzugt 5 bis 30 Gew.-% an dem Polymer/Partikel Komposit ausmachen.

15. Polymer/Partikel-Komposit gemäß mindestens einem der Ansprüche 13 oder 14, wobei (i) das Polymer auf Polyvinylchlorid und die wasserunlöslichen Partikel auf Polyurethan als wasserdispergierbarem Polymer und Calcium oder Zinkionen als mehrwertigen Kationen, bevorzugt in Form von Zinkionen beruht, oder (ii) das Polymer auf Polyurethan und die wasserunlöslichen Partikel auf Polyurethan als wasserdispergierbarem Polymer und Calcium oder Zinkionen als mehrwertigen Kationen, bevorzugt in Form von Zinkionen beruht.

16. Verwendung von wasserunlöslichen Partikeln gemäß einem der Ansprüche 1 bis 4 oder 12 zur Verbesserung der Abriebfähigkeit oder der Flammschutzeigenschaften von Polymeren durch Bildung eines Polymer/Partikel-Komposits mit den wasserunlöslichen Partikeln.
